# EUROPÄISCHE PATENTSCHRIFT

(11) **EP 3 592 672 B1**
(45) Veröffentlichungstag und Bekanntmachung des Hinweises auf die Patenterteilung: **16.09.2020**
(21) Anmeldenummer: 18710389.0
(22) Anmeldetag: 02.03.2018
(51) Int. Cl.: B65G 17/16, B65G 17/38, B65G 47/40, B65G 47/58, B65G 47/62

(54) **VERTIKALFÖRDERER MIT SCHUBKETTE UND KETTENGLIED, FÖRDERELEMENT UND AUFGABEVORRICHTUNG**
VERTICAL CONVEYOR COMPRISING A RIGID CHAIN AND A CHAIN LINK, CONVEYING ELEMENT AND DELIVERY DEVICE
CONVOYEUR VERTICAL COMPRENANT UNE CHAÎNE DE POUSSÉE ET MAILLON DE CHAÎNE, ÉLÉMENT DE CONVOYAGE ET DISPOSITIF DE DISTRIBUTION

(30) Priorität: 06.03.2017 DE 102017104556
(43) Veröffentlichungstag der Anmeldung: 15.01.2020
(60) Teilanmeldung: 19157122.3
(73) Patentinhaber: Aumund Fördertechnik GmbH, 47495 Rheinberg (DE)
(72) Erfinder: HEINE, Oliver, 47647 Kerken (DE)
(74) Vertreter: Feucker, Max Martin
(86) Internationale Anmeldenummer: PCT/EP2018/055180
(87) Internationale Veröffentlichungsnummer: WO 2018/162347

(56) Entgegenhaltungen:
- EP-A1- 1 352 854
- WO-A1-94/10070
- WO-A2-2015/001254
- BE-A- 491 641
- DE-A1- 10 331 977
- DE-A1-102014 007 458
- DE-U1- 8 806 871
- JP-A- H0 664 722
- US-A- 2 365 714
- US-A- 4 981 210

## Beschreibung

Die vorliegende Erfindung betrifft einen Vertikalförderer zum stetigen Fördern von Gütern, insbesondere Schüttgütern, in vertikaler Richtung, mit mindestens einem zwischen einem Fördererfuß und einem vertikal darüber angeordneten Fördererkopf geschlossen umlaufenden Förderstrang, der mindestens ein Antriebsmittel und eine Vielzahl von an dem Antriebsmittel angebrachten Förderelementen, insbesondere Bechern, zur Aufnahme der Güter umfasst, und mit mindestens einem Antrieb zum Antreiben des mindestens einen Antriebsmittels zu einer Umlaufbewegung in einer Umlaufebene.

Ein Vertikalförderer mit den vorgenannten Merkmalen ist aus WO 96/26139 A1 bekannt. Bei diesem Vertikalförderer ist das Antriebsmittel durch einen Gurt gebildet. Es ist aber auch bekannt, dass das Antriebsmittel durch eine Zugkette gebildet sein kann. In beiden Fällen muss der Antrieb für das Antriebsmittel am Fördererkopf an das Antriebsmittel angreifen. Dies macht es erforderlich, dass die Konstruktion zum Tragen des Antriebes und des Förderstranges im Fördererkopf große Kräfte aufnehmen muss. Zudem wird die Förderhöhe bereits durch die Zugspannungen, die aus dem Eigengewicht der Förderstränge resultieren, begrenzt. Der Einsatz von Zugmitteln birgt die Gefahr des Förderstrangabsturzes und erfordert Vorrichtungen zum Spannen der Zugmittel. Bei den bekannten Vertikalförderern erfolgt die Entleerung der Becher am Fördererkopf in dem engen Geschwindigkeitsbereich, für den sie konzipiert wurden, was es erforderlich macht, dass das Antriebsmittel immer mit der gleichen Geschwindigkeit angetrieben werden muss, unabhängig von der zu erzielenden Förderleistung. Die Befüllung der Becher erfolgt bei offener Becherfolge, die sich entgegen der Befüllungsrichtung bewegt, wodurch keine saubere Fördergutaufgabe wie bei einem Abzugsförderer gewährleistet werden kann.

Aus DE 10 2014 007 458 A1 und DE 10 2011 013 357 A1 ist jeweils eine Schubkette bekannt, die durch ein Ritzel formschlüssig antreibbar ist. Aus DE 25 46748 C3 ist ein Pendelbecherwerk bekannt.

Aus dem Dokument WO9410070 A1 ist ein Vertikalförderer nach dem Oberbegriff des Anspruchs 1 bekannt.

Aufgabe der vorliegenden Erfindung ist es daher, die mit Bezug zum Stand der Technik geschilderten Nachteile zu überwinden und insbesondere einen Vertikalförderer anzugeben, dessen Konstruktion vereinfacht ist und welcher wirtschaftlicher betrieben werden kann.

Gelöst wird die Aufgabe durch einen Vertikalförderer mit den Merkmalen des Anspruchs 1. Vorteilhafte Weiterbildungen des Vertikalförderers sind in den abhängigen Ansprüchen und in der Beschreibung angegeben, wobei einzelne Merkmale der vorteilhaften Weiterbildungen in technologisch sinnvoller Weise beliebig miteinander kombinierbar sind. Insbesondere können Merkmale des Vertikalförderers mit einzelnen Aspekten des Kettengliedes, des Förderelementes und/oder der Aufgabevorrichtung kombiniert werden.

Gelöst wird die Aufgabe durch einen Vertikalförderer mit den eingangs genannten Merkmalen, bei dem das Antriebsmittel eine Schubkette ist, wobei die Kettenglieder der Schubkette so ausgebildet sind, dass ein Abknicken gegenüber einem benachbarten Kettenglied in der Umlaufebene nach außen über einen Schwenkwinkel von 180 Grad hinaus verhindert ist, und bei dem mindestens ein Auflager ausgebildet ist, auf dem die in sich geschlossene Schubkette mit einer in der Umlaufebene der Schubkette nach außen gerichteten Außenseite aufliegt, wobei sich das Auflager bei sich umlaufend bewegender Schubkette dreht.

Die Erfindung sieht in ihrem Grundgedanken also vor, dass die Förderelemente an Kettengliedern angebracht sind, die Schubkräfte auf in Umlaufrichtung benachbarte Kettenglieder übertragen können. Durch geeignete Mittel wird die Schubkette insbesondere so ausgerichtet, dass jede Schubkette im Bereich des Fördererfußes auf bevorzugt zwei Auflagern steht und insbesondere zwei vertikal ausgerichtete Kettentrume ausbildet. Da die Kettenglieder der Schubkette gegenüber benachbarten Kettengliedern in der Umlaufebene nach außen nicht über 180 Grad abknicken können und insbesondere die Kraftangriffspunkte der Förderelemente auf der nach außen gerichteten Seite der Schwenkachse liegen, stabilisiert sich die Schubkette während der Vertikalfahrt selbst.

Aufgrund der Ausbildung des Antriebsmittels als Schubkette muss der Antrieb nicht im Bereich der Umlenkung des Förderstranges im Fördererkopf angeordnet sein, so dass keine tragende Struktur für einen Antrieb vorgesehen sein muss. Die Anordnung des Antriebs entfernt vom Fördererkopf hat auch zur Folge, dass eine Fliehkraftentleerung der insbesondere als Becher ausgebildeten Förderelemente nach außen im Bereich des Fördererkopfes nicht zwingend ist. Vielmehr kann eine Entleerungsbewegung der Becher im Bereich des Fördererkopfes durch geeignete Maßnahmen eingeleitet werden, sodass die Becher in Richtung des Inneren des Förderstranges entleert werden können. Die Geschwindigkeit des umlaufenden Förderstranges kann somit an die jeweils benötigte Förderleistung angepasst werden, so dass die Becher immer vollständig befüllt werden können. Die Fördergeschwindigkeit kann also immer an die gewünschte Förderleistung angepasst werden.

Aufgrund der Schubkette ist auch keine Spannvorrichtung für das Antriebsmittel notwendig. Darüber hinaus besteht nicht die Gefahr eines Absturzes des Förderstranges, wenn die Kettenglieder beschädigt werden, da diese keinen Zugkräften ausgesetzt sind.

Bevorzugt ist, dass der mindestens eine Antrieb ausschließlich im Bereich des Fördererfußes auf die Schubkette wirkt. Der Antrieb wirkt also insbesondere im Bereich der Umlenkung des Förderstranges am Fördererfuß auf die Schubkette. Der Antrieb ist jedenfalls unterhalb der Hälfte der Strecke zwischen Fördererfuß und Fördererkopf angeordnet. Oberhalb des Antriebs wirken also allenfalls Führungselemente auf die Schubkette. Durch die Anordnung des Antriebes am Fördererfuß ist zum einen eine einfachere Zugänglichkeit des Antriebes insbesondere für Wartungsarbeiten gegeben. Zudem müssen die den Vertikalförderer umgebenden Schlote nur als Schutz für den Vertikalförderer ausgebildet sein, da sie den Antrieb des Förderstranges und den Förderstrang nicht tragen müssen.

Als Vertikalförderer werden aber auch Steilförderer verstanden.

Prinzipiell kann das die Antriebskraft auf die Schubkette übertragende Antriebselement des Antriebes innerhalb des umlaufenden Förderstranges angeordnet sein. Es ist aber bevorzugt, dass ein die Antriebskraft auf die Schubkette übertragendes Antriebselement des Antriebes in der Umlaufebene auf einer Außenseite der Schubkette angeordnet ist. Der Antrieb greift also von außerhalb des geschlossen umlaufenden Förderstranges an die Schubkette an. Somit steht der Raum innerhalb des geschlossen umlaufenden Förderstranges zur Beladung der Förderelemente zur Verfügung. Ebenso befinden sich in der oberen Umlenkung keine Umlenkelemente innerhalb des geschlossen umlaufenden Förderstrangs, so dass dort der Raum zur Entleerung der Förderelemente zur Verfügung steht. Insbesondere wenn eine Entleerung aufgrund einer mechanisch eingeleiteten Kippbewegung der Förderelemente also insbesondere ohne Fliehkraftentleerung erfolgt, müssen der Aufbau und die Geometrie der Förderelemente nicht für eine Fliehkraftentleerung optimiert sein. Zudem kann durch die Anordnung des Antriebs außerhalb des Förderstranges eine Beladung der Förderelemente am tiefsten Punkt des umlaufenden Förderstranges erfolgen und die Entleerung am höchsten Punkt des umlaufenden Förderstranges, so dass die Nettoförderhöhe erhöht ist. Aufgrund der größeren Freiheit bei der Beladung und Entleerung der Förderelemente wäre prinzipiell auch ein Taktbetrieb oder eine gleichzeitige Befüllung mit unterschiedlichen Fördergütern möglich. Die Aufgabe- und Abwurfseite sind frei wählbar und können somit auch auf der gleichen Seite liegen.

Es wäre prinzipiell vorstellbar, dass die Antriebskraft formschlüssig auf die Schubkette übertragen wird. Es ist aber bevorzugt, dass ein Antriebselement des Antriebes die Antriebskraft kraftschlüssig auf die Schubkette überträgt. Die Kraft wird also insbesondere durch Reibung von dem Antriebselement des Antriebs auf die Schubkette übertragen. Der Umlenkradius der Schubkette ist dabei unabhängig vom Durchmesser des Antriebselementes.

Bevorzugt sind ein Antriebselement des Antriebes und ein die Schubkette tragendes Auflager durch dasselbe Bauteil verwirklicht. Die durch den Antrieb verursachte Drehbewegung des die Schubkette tragenden Auflagers treibt also den Förderstrang zu der umlaufenden Bewegung an. Insbesondere sind für jede Schubkette bevorzugt zwei Auflager im Bereich der Umlenkung im Fördererfuß vorgesehen, auf denen die Schubkette steht und von denen mindestens ein Auflager angetrieben wird.

Zur Verwirklichung der Erfindung ist prinzipiell nur genau eine Schubkette notwendig. Es ist aber bevorzugt, dass mindestens zwei Schubketten vorgesehen sind, wobei zwischen zwei Schubketten jeweils die Förderelemente pendelnd gelagert sind. Die mehreren Schubketten sind also insbesondere versetzt zueinander angeordnet.

Um die mindestens eine Schubkette vertikal auszurichten, sind bevorzugt im unteren Bereich des Vertikalförderers auf zwei gegenüberliegenden Außenseiten des Förderstranges in der Ebene der mindestens einen umlaufenden Schubkette Führungen angeordnet, die die Ausbildung zweier paralleler und vertikal ausgerichteter Kettentrume vorgeben. Die Führungen sind insbesondere unmittelbar oberhalb der Umlenkung der mindestens einen Schubkette am Fördererfuß angeordnet. Die Führungen sind sowohl in Bezug auf die geschlossen umlaufende Schubkette außen und innen angeordnet. Insbesondere sind im Bereich des Fördererkopfes ebenfalls Führungen zumindest auf der Außenseite des Förderstranges und bevorzugt auch seitlich des Förderstranges angeordnet. Es können auch entsprechende Führungen zwischen Fördererfuß und Fördererkopf angeordnet sein. Die Führungen auf gegenüberliegenden Außenseiten sind insbesondere so zueinander beabstandet, dass die Umlenkung von dem einen Kettentrum zu dem anderen Kettentrum im Bereich des Fördererfußes und des Fördererkopfes durchgehend mit einem minimalen Schwenkwinkel zwischen den in der Umlenkung befindlichen Kettengliedern erfolgt, bei welchem benachbarte Kettenglieder an Anschlägen aneinander anliegen. Es kann aber auch vorgesehen sein, dass die Führungen der unterschiedlichen Kettentrume so zueinander beabstandet sind, dass die Schubkette nach anfänglicher Umlenkung aus der vertikalen Ausrichtung im Fördererkopf und Fördererfuß abschnittsweise horizontal verläuft, bevor eine abschließende Umlenkung in den anderen vertikal ausgerichteten Kettentrum erfolgt. Durch die Führungen wird verhindert, dass die zulässige frei Knicklänge der auf Druck beanspruchten Kettentrume überschritten wird. Insbesondere kann hierzu auch vorgesehen sein, dass auf einer Innenseite und/oder seitlich des Förderstranges entsprechende Führungen für die mindestens eine Schubkette angeordnet sind. Da die Führungen für die Schubkette keine Vertikallasten tragen müssen, sind die Kosten für den Stahlbau des Vertikalförderers verringert. Die Führungen können beispielsweise durch Führungsrollen und/oder Führungsschienen gebildet sein, wobei insbesondere die Führungsrollen an den Kettengliedern angeordnet sein können. Alternativ können auch Führungsschienen insbesondere einteilig an der Schubkette oder den Kettengliedern der Schubkette ausgebildet sein, die mit an dem Stahlbau gelagerten Führungsrollen während der Vertikalfahrt zusammenwirken.

In einer Ausführungsform ist vorgesehen, dass insbesondere eine erfindungsgemäße Aufgabevorrichtung oder beispielsweise ein Förderband als Aufgabevorrichtung für die Güter insbesondere im Bereich des Fördererfußes innerhalb des geschlossen umlaufenden Förderstranges angeordnet ist. Mit der Aufgabevorrichtung werden die Güter also von innerhalb des Förderstranges in die Förderelemente aufgegeben. Insbesondere erfolgt die Aufgabe in jene Förderelemente, die sich im Bereich des Fördererfußes bereits in der Umlenkung von dem einen vertikalen Kettentrum zu dem anderen vertikalen Kettentrum befinden. Durch eine direkte Beschickung über ein Förderband wird insbesondere die Aufgabe von nicht rutschfähigen Gütern vereinfacht.

Um den Aufgabewiderstand zu verringern, ist die Aufgabevorrichtung so angeordnet, dass die Aufgabe der Güter in die Förderelemente in einem Bereich des Förderstranges erfolgt, in dem sich die Förderelemente vertikal nach unten bewegen oder in dem die Förderelemente umgelenkt werden. Die Förderelemente bewegen sich also nicht wie bei vorbekannten Vertikalförderern entgegen dem Fördergutstrom. Insbesondere wenn beabsichtigt ist, die Güter in sich nach unten bewegende Förderelemente aufzugeben, kann vorgesehen sein, dass die Becher Taschen zur Aufnahme der Güter aufweisen, welche so ausgebildet sind, dass bei einer geschlossenen Fahrt der Becher, bei welcher sich benachbarte Becher mit geeigneten Mitteln überlappen und bei welcher die Öffnungen der Becher vertikal ausgerichtet sind, die Güter aufgenommen werden können. Die Taschen erstrecken sich bei der geschlossenen Fahrt also insbesondere von der vertikal ausgerichteten Öffnung nach unten.

Mit der Erfindung wird aber auch ermöglicht, dass eine Aufgabevorrichtung an einer beliebigen Stelle des Vertikalförderers, insbesondere weit oberhalb des Fördererfußes angeordnet sein kann.

Da keine Fliehkraftentleerung vorgesehen sein muss, ist in einer Ausführungsform der Erfindung vorgesehen, dass eine Aufnahmevorrichtung, beispielsweise in Form eines Förderbandes, für die aus den Förderelementen entleerten Güter innerhalb des geschlossen umlaufenden Förderstranges insbesondere im Bereich des Fördererkopfes angeordnet ist.

Insbesondere kann eine Aufnahmevorrichtung für die aus den Förderelementen entleerten Güter bevorzugt weit unterhalb des Fördererkopfes angeordnet sein. Mit dem Vertikalförderer können somit auch Güter von dem Fördererkopf zu dem Fördererfuß gefördert werden.

Um die von den Förderelementen aufgenommenen Güter aus den Förderelementen zu entleeren, müssen diese insbesondere verkippt werden. Hierzu ist insbesondere eine Kurvenscheibe an dem Vertikalförderer ausgebildet, die so angeordnet und ausgebildet ist, dass die an der Kurvenscheibe vorbeilaufenden Förderelemente eine von der Kurvenscheibe vorgegebene Ausrichtung einnehmen. Durch die Kurvenscheibe können die Förderelemente also an einer beliebigen Stelle des Vertikalförderers eine durch die Kurvenscheibe vorgegebene Ausrichtung vornehmen. Hierzu weisen die Förderelemente insbesondere die weiter unten beschriebenen Anschlagselemente und Vorsprungsgestaltungen auf, von denen zumindest die Vorsprungsgestaltung mit der Kurvenscheibe wechselwirkt. Bevorzugt ist die Kurvenscheibe im Bereich der Umlenkung am Fördererkopf angeordnet. Die während der Aufwärtsfahrt insbesondere frei pendelnden Förderelemente gelangen bei der Einfahrt in die Umlenkung zunächst mit den Anschlagselementen an entsprechende Gegenanschlagselemente an den Schubketten, wodurch eine Kippbewegung relativ zur Schwerkraftrichtung eingeleitet wird. Im Folgenden gelangt die Vorsprungsgestaltung an den Förderelementen mit der Kurvenscheibe in Wechselwirkung, wodurch ein vollständiges Auskippen der Förderelemente bewirkt wird. Die Kurvenscheibe kann zudem so ausgebildet sein, dass die Förderelemente bei der folgenden Abwärtsfahrt so ausgerichtet werden, dass sie sich gegenseitig überlappen und mit ihrer Öffnung in das Förderstranginnere orientiert sind. Es folgt somit eine sogenannte geschlossene Fahrt. Während dieser Fahrt sind insbesondere Anschlagselemente an den Förderelementen mit entsprechenden Gegenanschlagselementen an den Kettengliedern in Anlage. Durch die Kurvenscheibe werden also zum einen der Zeitpunkt und zum anderen die relative Geschwindigkeit der Ausleerbewegung vorgegeben. Damit lässt sich das Abwurfverhalten an die Anforderungen der unterschiedlichen Fördergüter anpassen.

Aufgrund der Anordnung des Antriebes am Fördererfuß und des damit verbundenen niedrigen Schwerpunktes kann auch vorgesehen sein, dass der Vertikalförderer ein Fahrwerk aufweist, mittels dessen der Vertikalförderer beispielsweise auf Schienen verfahrbar ist.

Ein Kettenglied für eine Schubkette eines insbesondere erfindungsgemäßen Vertikalförderer wird auch beschrieben, bei welchem an gegenüberliegenden Enden des Kettengliedes miteinander korrespondierende Gelenkelemente zur Ausbildung einer schwenkbaren Verbindung mit einem baugleichen Kettenglied ausgebildet sind und wobei an den Enden des Kettengliedes miteinander korrespondierende Gelenkelemente zur Ausbildung einer schwenkbaren Verbindung mit einem baugleichen Kettenglied ausgebildet sind und wobei an den Enden des Kettengliedes miteinander korrespondierende Anschläge so ausgebildet sind, dass ein Abknicken gegenüber den benachbarten Kettengliedern einer aus baugleichen Kettengliedern aufgebauten, umlaufenden Schubkette in der Umlaufebene nach außen über einen Schwenkwinkel von 180 Grad hinaus verhindert ist und in die entgegengesetzte Richtung ein Abknicken unter einen minimalen Schwenkwinkel verhindert ist, wobei durch den minimalen Schwenkwinkel ein minimaler Umlenkradius im Bereich einer Umlenkung der Schubkette vorgegeben ist, wobei zumindest bei einer gegenseitigen Anlage der Anschläge eine Schubkraft von einem Kettenglied auf das jeweils benachbarte Kettenglied über die Anschläge übertragbar ist.

Das Kettenglied kann beispielsweise aus zwei gegenüberliegenden Laschen bestehen, bevorzugt ist aber, dass jedes Kettenglied aus einem einteiligen Bauteil besteht. Insbesondere wird die Verwendung eines solchen Kettengliedes für einen Vertikalförderer beschrieben.

Gegenüber bekannten Kettengliedern von Zugketten wird somit eine Leichtbauweise ermöglicht, da die Kettenglieder nicht mehr für die Übertragung von Zugkräften ausgelegt sein müssen. Mit einer auf solchen Kettengliedern basierenden Schubkette ist zudem der Polygoneffekt geringer, so dass eine größere Teilung ermöglicht wird, wodurch Kosten gespart werden können. Auch weist eine solche Schubkette keine Schwingungs- oder Schieflaufprobleme auf.

Bevorzugt weist das Kettenglied eine Anbringung für Förderelemente auf, wobei die Anbringung versetzt zu einer fiktiven Ebene ist, die durch von den Gelenkelementen vorgegebenen Schwenkachsen aufgespannt wird. In einem montierten Zustand als umlaufende Schubkette sind diese Anbringungen auf der nach außen gerichteten Seite der Schwenkachsen angeordnet. In einer Vertikalfahrt werden die Kettenglieder somit automatisch in ihre durch den maximalen Schwenkwinkel von 180° vorgegebene fluchtende Stellung gebracht und somit automatisch ausgerichtet. Die Kettenglieder sind somit während der Vertikalfahrt in Anlage mit den korrespondierenden Anschlägen. Diese Ausrichtung wird beibehalten, da die Kraftangriffspunkte der Förderelemente auf der nach außen gerichteten Seite der Schwenkachsen liegen. Somit ist eine Selbststabilisierung gegeben.

Bevorzugt weist das Kettenglied eine Auflageoberfläche auf, welche zur Außenseite einer in sich geschlossenen ausgebildeten Schubkette gerichtet ist und über welche die Schubkette kraftschlüssig antreibbar ist. Über die Auflageoberfläche kann die aus mehreren Kettengliedern bestehende und in sich geschlossen ausgebildete Schubkette beispielsweise mittels eines Rades kraftschlüssig angetrieben werden. Die Auflageoberfläche muss also von der Außenseite für einen Antrieb beispielsweise in der Form eines Rades zugänglich sein. Bevorzugt erstreckt sich die Auflageoberfläche über mindestens die Hälfte der Länge des Kettengliedes, bevorzugt über mindestens 70 % der Länge des Kettengliedes.

Bevorzugt ist die Auflageoberfläche zwischen zwei Wänden des Kettengliedes angeordnet, wobei insbesondere in Richtung der Außenseite oberhalb der Auflageoberfläche kein weiteres Element des Kettengliedes zwischen den Wänden ausgebildet ist, so dass die Auflageoberfläche zum einen seitlich durch die beispielsweise durch Laschen gebildeten oder einteilig mit der Auflageoberfläche gebildeten Wände begrenzt ist und andererseits die Auflageoberfläche von der Außenseite zugänglich ist. Somit wird aber auch eine Art Kanal entlang der Schubkette ausgebildet, in welchen keine Kettengliedelemente hineinragen, so dass ein Antriebselement entlang der gesamten Schubkette auf die Auflageoberflächen der Kettenglieder wirken kann. Es ist zwar bevorzugt, dass die Auflageoberfläche von benachbarten Kettengliedern ohne Spalt aneinander anliegen, wenn die Kettenglieder mit dem minimalen Schwenkwinkeln zueinander ausgerichtet sind, es kann aber auch vorgesehen sein, dass in diesem Zustand ein Spalt zwischen den Auflageoberflächen benachbarter Kettenglieder ausgebildet ist. So könnte beispielsweise auch vorgesehen sein, dass kein Spalt zwischen den Auflageoberflächen benachbarter Schubketten ausgebildet ist, wenn die Kettenglieder 180°zueinander ausgerichtet sind.

Bevorzugt ist auch, dass eine Auflageoberfläche des Kettengliedes, welche zur Außenseite einer in sich geschlossenen ausgebildeten Schubkette gerichtet ist, so geformt und angeordnet ist, dass die Auflageoberfläche ohne Spalt an der entsprechenden Auflageoberfläche des in Umlaufrichtung benachbarten Kettengliedes anliegt, wenn die Kettenglieder mit dem minimalen Schwenkwinkel zueinander ausgerichtet sind. Somit wird durch die Auflageoberflächen der Kettenglieder im Bereich der Umlenkung eine geschlossene, teilringförmige Auflageoberfläche ausgebildet, mit der die Schubkette insbesondere auf bevorzugt zwei Auflagern, beispielsweise in Form von Rädern, steht. Bevorzugt ist die Auflageoberfläche so gewölbt, dass sie dem minimalen Umlenkradius der Schubkette entspricht. Diese teilringförmige Auflageoberfläche kann auch als Antriebsfläche dienen, an der ein Antriebselement, beispielsweise in Form eines Rades, schlupffrei mit nur geringem Verschleiß kraftschlüssig angreifen kann. Bei dem Antriebselement und dem Auflager kann es sich vorzugsweise um das gleiche Bauteil handeln.

Alternativ oder zusätzlich könnte auch eine gegebenenfalls weitere Anlageoberfläche ausgebildet sein, die in der fluchtenden Anordnung während der Vertikalfahrt der Kettenglieder geschlossen ist. An dieser Anlageoberfläche könnte ein Antriebsrad kraftschlüssig im Bereich der vertikal ausgerichteten Kettentrume angreifen. Durch entsprechende Ausbildung der Kettenglieder und Antriebselemente ist auch ein formschlüssiger Antrieb, beispielsweise in Form eines Triebstockantriebs, sowohl während der vertikalen Anordnung der Kettenglieder, als auch im Bereich der Umlenkung denkbar. Insbesondere werden in der fluchtenden Anordnung während der Vertikalfahrt der Kettenglieder geschlossene Anlageoberflächen ausgebildet, an denen die Führungselemente, beispielsweise in Form von Rollen, anliegen. Diese können sowohl für eine seitliche Führung angeordnet sein, als auch auf der innenliegenden und außenliegenden Seite des Kettentrums.

Bei einer einteiligen Ausführung der Kettenglieder ist bevorzugt, dass jedes Kettenglied im Querschnitt U-förmig ist und insbesondere die Auflageoberfläche durch einen Boden des U-förmigen Querschnitts gebildet ist, wobei der Boden versetzt (insbesondere zum Inneren der geschlossen umlaufenden Schubkette) zu einer fiktiven Ebene angeordnet ist, die durch die von den Gelenkelementen vorgegebenen Schwenkachsen aufgespannt wird. Somit kann das Auflagerelement, auf dem die Schubkette steht, zwischen die Schenkel des Kettengliedes greifen, wodurch gleichzeitig eine seitliche Führung der Schubkette im Bereich der unteren Umlenkung gewährleistet ist.

Bevorzugt weist das Kettenglied in der Art einer gekröpften Kette einander gegenüberliegende Wände auf, wobei die Gelenkelemente zur Ausbildung der Schwenkachsen durch Ausnehmungen und Vorsprünge gebildet sind, die an beiden Enden des Kettengliedes jeweils an den einander gegenüberliegenden Wänden des Kettengliedes ausgebildet sind, wobei die Wände im Bereich der Gelenkelemente an dem ersten Ende so weit voneinander beabstandet sind, dass die Wände mit den Elementen an dem zweiten Ende zwischen den Wänden des ersten Endes eingreifen können. Zwischen den Wänden ist insbesondere die Auflageoberfläche ausgebildet.

Alternativ kann die Schubkette auch durch zwei unterschiedliche Kettenglieder ausgebildet sein, die abwechselnd angeordnet sind. Jedenfalls wird durch die Ausbildung der zwei Wände mit den Ausnehmungen und Vorsprüngen erreicht, dass keine durchgängigen Bolzen zur Ausbildung der Schwenkachse erforderlich sind, so dass das Auflager-/Antriebselement durchgehend innerhalb der zwei Wände des Kettengliedes durchlaufen kann. Das Antriebselement kann also kontinuierlich auf der durch die Schubkette gebildeten Antriebsfläche abrollen, wodurch im Gegensatz zur zyklischen Belastung von Antriebsrädern bei Zugketten der Verschleiß verringert wird.

Eine Schubkette wird auch beschrieben, die aus mehreren der zuvor beschriebenen Kettenglieder besteht, wobei die Schubkette in sich geschlossen ist.

Ein Förderelement insbesondere für einen erfindungsgemäßen Vertikalförderer wird auch beschrieben, bei dem an zumindest einer Wand außenliegend zumindest ein Lagerelement zur drehbaren Verbindung mit einem Schubkettenglied ausgebildet ist, wobei der Schwerpunkt des Förderelements unterhalb der durch das mindestens eine Lagerelement vorgegebenen Pendelachse ausgebildet ist. Somit wird das Förderelement immer bestrebt sein eine zu der Pendelachse vorgegebene Ausrichtung einzunehmen.

Das Förderelement ist insbesondere ein Becher.

Insbesondere ist an dem Förderelement mindestens ein Anschlagselement an einer dem Schubkettenglied zugewandten Wandung ausgebildet, das insbesondere so angeordnet ist, dass eine Pendelbewegung des Förderelements gegenüber dem Schubkettenglied durch ein an dem Schubkettenglied ausgebildeten Gegenanschlagselement in eine Richtung begrenzt ist, so dass die Förderelemente insbesondere während einer Vertikalfahrt nach unten mit ihrer offenen Seite ins Innere des Förderstranges ausrichtbar sind. Somit führen die Förderelemente während einer Vertikalfahrt nach unten keine Pendelbewegung aus. Sie können vielmehr so gestaltet sein, dass sie während der Leertrumfahrt die beiden Kettentrume in der Art miteinander verbindet, dass sie sich nicht gegeneinander verschieben können und somit zur Eigenstabilität des Förderstranges beitragen. Während der Vertikalfahrt nach oben sind die Förderelemente mit aufgenommenen Gütern pendelnd gelagert, wobei diese Pendelbewegung gegebenenfalls durch ein weiteres Anschlagselement begrenzt sein kann. Eines der Anschlagselemente kann auch so an der Wandung angeordnet sein, dass das Anschlagselement bei Einfahrt des Förderelementes in die obere Umlenkung mit dem Gegenanschlagselement an dem Schubkettenglied in Anlage kommt, so dass eine Auskippbewegung des Förderelementes eingeleitet wird.

Zudem kann vorgesehen sein, dass an einer den Aufnahmeraum des Förderelements begrenzenden Kante ein Überhang angeordnet ist, der nach außen über einen Becherboden übersteht und in einem an dem Vertikalförderer montierten Zustand zumindest während der Umlenkung im Bereich des Fördererfußes einen Rand eines benachbarten Förderelement zur Ausbildung einer geschlossenen Becherfolge überlappt, wobei sich insbesondere die geschlossene Becherfolge während der Ausfahrt aus der Umlenkung aufgrund der pendelnden Lagerung an den Kettengliedern öffnet. Somit liegt insbesondere im Bereich, in denen die Förderelemente beladen werden, eine geschlossene Becherfolge vor, so dass kein Schüttgut zwischen zwei benachbarte Becher gelangen kann. Hierdurch ist gewährleistet, dass keine Überschüttung des Fußes möglich ist. Ebenso wird keine Schöpfarbeit auftreten. Zudem ist es möglich, dass mit einer geeigneten Aufgabevorrichtung eine Schüttgutsäule auf der geschlossenen Becherfolge steht und der Vertikalförderer als Abzugsförderer betrieben werden kann. Die geschlossene Becherfolge in Verbindung mit den außerhalb des Fördergutstromes befindlichen Antriebsmitteln sorgt außerdem für eine Unempfindlichkeit gegenüber der Fördergutkorngröße.

Zusätzlich kann vorgesehen sein, dass an wenigstens einer seitlichen Außenwand des Bechers außen eine Vorsprungsgestaltung ausgebildet ist, die insbesondere so angeordnet und ausgebildet ist, dass die Vorsprungsgestaltung mit einer an dem Vertikalförderer angeordneten Kurvenscheibe so zusammenwirkt, dass eine Ausrichtung des an der Kurvenscheibe vorbeilaufenden Förderelements von der Kurvenscheibe vorgegeben wird. Somit wird es ermöglicht, dass das in dem Förderelement befindliche Gut an einer beliebigen Stelle des Vertikalförderers entleert werden könnte, wenn an dieser Stelle die Kurvenscheibe entsprechend ausgebildet ist.

Insbesondere könnte auch vorgesehen sein, dass der Boden des Bechers als Sieb ausgebildet ist, so dass das Schüttgut insbesondere während der Aufgabe auf die geschlossene Becherfolge durch den Boden des Bechers gesiebt würde.

Eine Aufgabevorrichtung wird auch vorgeschlagen, die insbesondere im Bereich des Fördererfußes des erfindungsgemäßen Vertikalförderers angeordnet ist. Die Aufgabevorrichtung umfasst insbesondere einen Bodenbereich, der ein Durchgangsloch aufweist und der trichterförmig hin zu dem Durchgangsloch abfällt, wobei oberhalb des Bodenbereichs eine Einstellvorrichtung angeordnet ist, deren Lage oder Ausrichtung zu dem Durchgangsloch einstellbar ist und die insbesondere die Größe des Durchgangslochs variiert. Der Bodenbereich der Aufgabevorrichtung ist also so ausgebildet, dass in die Aufgabevorrichtung eingefülltes Schüttgut zu dem Durchgangsloch rutscht. Um nun das Aufgabeverhalten einzustellen, ist oberhalb des Bodenbereichs eine Einstellvorrichtung angeordnet, die in Abhängigkeit des gewünschten Aufgabeverhaltens in ihrer Lage oder Ausrichtung verändert werden kann. Bei der Verwendung der Aufgabevorrichtung unter Ausbildung einer Schüttgutsäule (Abzugsfördererbetrieb) reduziert die Einstellvorrichtung die Scherkräfte innerhalb des Schüttgutes.

Die Einstellvorrichtung der Aufgabevorrichtung umfasst insbesondere eine schwenkbar gelagerte Platte, deren Schwenkachse oberhalb des Durchgangslochs verläuft und die sich von der Schwenkachse zu einer Seite des Durchgangsloches erstreckt. Somit ist eine Befüllung der Aufgabevorrichtung auf der Seite der Schwenkachse möglich, die der Platte gegenüberliegt.

Prinzipiell kann die Einstellvorrichtung mittels eines geeigneten, beispielsweise elektromechanischen Antriebes verstellt werden. Es kann aber auch vorgesehen sein, dass die Aufgabevorrichtung eine Betätigung zur Einstellung der Länge oder Ausrichtung der Platte aufweist, wobei die Betätigung schwenkbar mit der Platte verbunden ist und in unterschiedlichen Stellungen an einem die Platte überdeckenden Deckel festlegbar ist.

Die Erfindung sowie das technische Umfeld werden nachfolgend beispielhaft anhand der Figuren erläutert. Es zeigen schematisch
- Figur 1:: einen Vertikalförderer mit einem Förderstrang aus zwei Schubketten und Förderelementen,
- Figur 2:: ein Kettenglied der Schubkette in perspektivischer Ansicht,
- Figur 3:: das Kettenglied in Seitenansicht,
- Figur 4:: ein Förderelement in perspektivischer Ansicht,
- Figur 5:: das Förderelement in Seitenansicht,
- Figur 6:: einen Fördererfuß des Vertikalförderers in Perspektivansicht,
- Figur 7:: den Fördererfuß in einer Schnittdarstellung,
- Figur 8:: einen Fördererkopf des Vertikalförderers in Perspektivansicht,
- Figur 9:: den Fördererkopf in einer teilweise freigeschnittenen Darstellung,
- Figur 10:: den Fördererkopf in einer Schnittdarstellung,
- Figur 11:: den Fördererkopf mit Kurvenscheibe für späten Abwurf in teilweise freigeschnittener Darstellung,
- Figur 12:: eine Aufgabevorrichtung in einer ersten Stellung,
- Figur 13:: die Aufgabevorrichtung in Schnittdarstellung in der ersten Stellung,
- Figur 14:: die Aufgabevorrichtung in einer zweiten Stellung und
- Figur 15:: eine Schnittansicht durch die Aufgabevorrichtung in der zweiten Stellung.

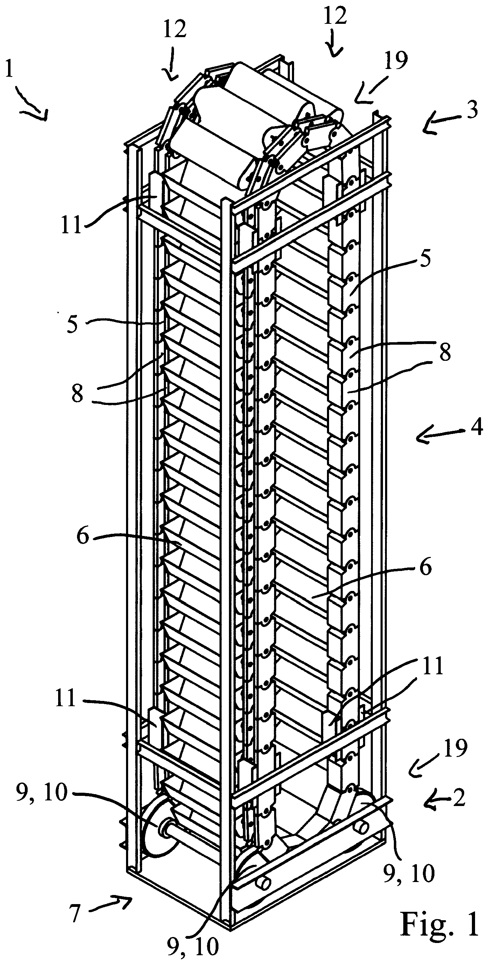

Figur 1 zeigt einen Vertikalförderer 1 zum stetigen Fördern von Schüttgütern, wobei der Vertikalförderer 1 einen Förderstrang 4 aufweist, der zwischen einem Fördererfuß 2 und einem Fördererkopf 3 umläuft. Der Förderstrang 4 umfasst zwei Schubketten 5 aus Kettengliedern 8, wobei zwischen den zwei Schubketten 5 Förderelemente 6 in Form von Bechern pendelnd an den Kettengliedern 8 gelagert sind. Die beiden Schubketten 5 stehen im Bereich des Fördererfußes 2 jeweils auf zwei als Antriebselemente 10 ausgebildeten Auflagern 9. Aufgrund von Führungen 11 im Bereich des Fördererkopfes 3 und des Fördererfußes 2 ist der Fördererstrang 4 vertikal ausgerichtet, sodass zwei parallel ausgerichtete und vertikal verlaufende Kettentrume 12 ausgebildet sind, die im Bereich des Fördererfußes 2 und des Fördererkopfes 3 jeweils in einer Umlenkung 19 umgelenkt werden. Der Antrieb 7 des Förderstranges 4 erfolgt über die Antriebselemente 10, die die Schubketten 5 kraftschlüssig antreiben. Die einzelnen Elemente des Vertikalförderers 1 und deren Funktion wird mit Bezug zu den weiteren Figuren erläutert.

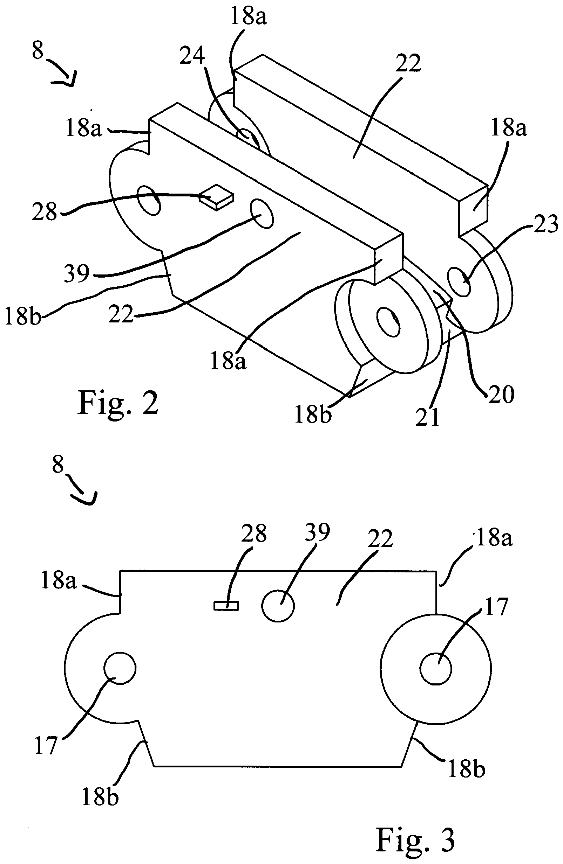

So zeigen die Figuren 2 und 3 ein Kettenglied 8 der Schubketten 5. Die Kettenglieder 8 sind jeweils einteilig mit einer im Querschnitt U-förmigen Gestalt ausgebildet, sodass zwei gegenüberliegende Wände 22 und ein Boden 21 ausgebildet werden. Der Boden 21 weist auf seiner zwischen den Wänden 22 angeordneten Oberfläche eine Auflageoberfläche 20 aus, dessen Funktion später erläutert wird. An einer der Wände 22 ist eine Anbringung 39 ausgebildet, an welcher ein Förderelement 6 mittels eines Lagerelements 26 schwenkbar gelagert werden kann. An der dem Förderelement 6 zugewandten Wand 22 ist zudem ein Gegenanschlagselement 28 ausgebildet, welches mit einem später erläuterten Anschlagselement 27 des Förderelements 6 zusammenwirken kann.

Das Kettenglied 8 weist an seinen Enden Gelenkelemente 17 in Form von Ausnehmungen 23 und Vorsprüngen 24 auf. Die Wände 22 sind in dem Bereich der Gelenkelemente 17 so zueinander beanstandet, dass gleichartige Kettenglieder 8 in Form einer gekröpften Kette miteinander verbunden werden können, wobei die Vorsprünge 24 in die Ausnehmungen 23 eingreifen, sodass die Kettenglieder 8 gelenkig miteinander verbunden sind.

Um eine Auslenkung von benachbarten Kettengliedern 8 einer Schubkette 5 zu begrenzen, sind an den Stirnflächen der Wände 22 Anschläge 18a, 18b ausgebildet. Bei Ausbildung einer in sich geschlossenen Schubkette 5 mit den Kettengliedern 8 sind die in der Ebene der geschlossenen Schubkette 5 außen angeordneten Anschläge 18a so ausgebildet, dass benachbarte Kettenglieder 8 maximal mit einem Schwenkwinkel von 180° zueinander verschwenkt werden können, sodass die benachbarten Kettenglieder 8 dann fluchtend zueinander angeordnet sind. Die bei der Ausbildung einer geschlossenen Schubkette 5 innen angeordneten Anschläge 18b sind so ausgebildet, dass benachbarte Kettenglieder 8 einen minimalen Schwenkwinkel nicht unterschreiten können, durch welchen auch ein minimaler Umlenkradius im Bereich der Umlenkungen 19 der geschlossenen Schubkette 5 vorgegeben wird.

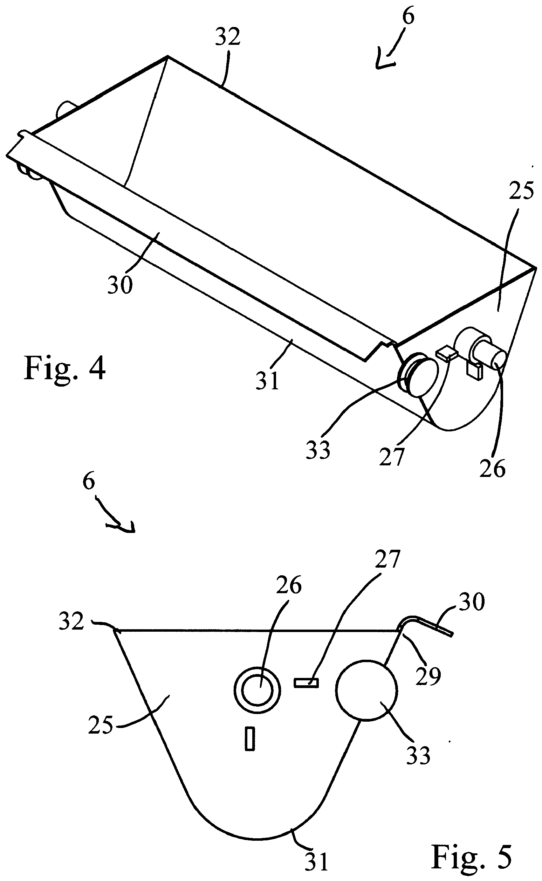

In den Figuren 4 und 5 ist ein Förderelement 6 in Form eines Bechers dargestellt, welches an seinen seitlichen Wandungen 25 außen Lagerelemente 26 aufweist, mit denen das Förderelement 6 zwischen zwei Schubketten 5 an den Kettengliedern 8 pendelnd gelagert ist. An der Wandung 25 sind außen zwei Anschlagselemente 27 angeordnet, die im montierten Zustand mit dem Gegenanschlagselement 28 des entsprechenden Kettengliedes 8 wechselwirken kann. Zudem ist an der Wandung 25 außen eine Vorsprunggestaltung 33 ausgebildet, die im Betrieb des Vertikalförderers 1 bei der Umlenkung 19 im Kopfbereich 3 mit einer später noch zu erläuternden Kurvenscheibe 16 wechselwirkt.

Das Förderelement 6 weist ferner einen Becherboden 31 auf, sowie einen die Öffnung des Förderelements 6 begrenzenden Rand 32. An der dem Rand 32 gegenüberliegenden Kante 29 ist ein Überhang 30 ausgebildet, der über das Förderelement 6 übersteht. Im Betrieb des Vertikalförderers 1 sind die Förderelemente 6 so angeordnet, dass zumindest im Bereich einer Umlenkung 19 der Überhang 30 den Rand 32 eines benachbarten Förderelementes 6 übergreift, sodass eine geschlossene Becherfolge ausgebildet ist. Es kann zudem vorgesehen sein, dass die Förderelemente 6 während einer Vertikalfahrt mit ihren Öffnungen ins Innere des Förderstranges 4 ausgerichtet sind, wobei auch in dieser Ausrichtung der Überhang 30 den Rand 32 eines benachbarten Förderelementes 6 zur Ausbildung einer geschlossenen Becherfolge übergreift.

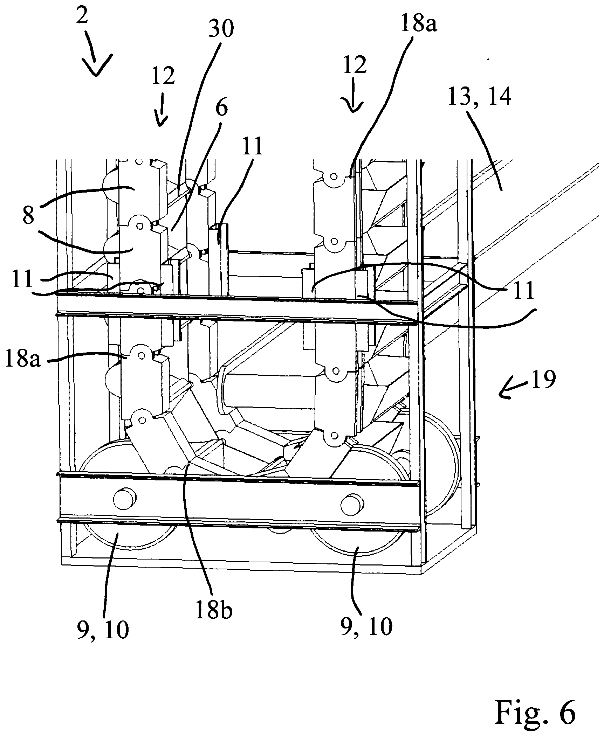

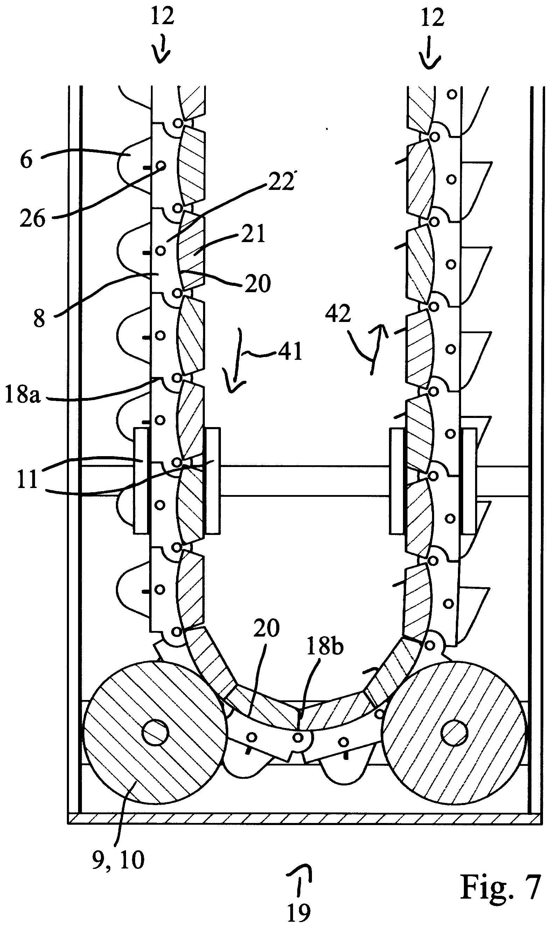

In den Figuren 6 und 7 ist der Fördererfuß 2 im Detail dargestellt. Im Betrieb läuft der Förderstrang 4 im linken Kettentrum 12 abwärts (Abwärtsfahrt 41) und nach der Durchführung durch die Umlenkung 19 im rechten Kettentrum 12 aufwärts (Aufwärtsfahrt 42). Die vertikale Ausrichtung der Kettentrume 12 wird durch die Führungen 11 vorgegeben. Es ist zu erkennen, dass die Kettenglieder 8 in den vertikal ausgerichteten Kettentrumen 12 mit ihren äußeren Anschlägen 18a aneinander liegen. In der Umlenkung 19 liegen benachbarte Kettenglieder 8 hingegen mit ihren inneren Anschlägen 18b aneinander an. Auch aufgrund der Ausbildung dieser Anschläge 18a, 18b können Schubkräfte von benachbarten Kettengliedern 8 aufeinander übertragen werden.

Zum Antrieb der Schubketten 5 greifen die Antriebselemente 10 zwischen die Wandungen 22 der Kettenglieder 8 ein, wobei die Antriebselemente 10 in Anlage mit der Auflageoberfläche 20 der Kettenglieder 8 gelangt. Die Auflageoberfläche 20 ist so ausgebildet, dass im Bereich der Umlenkung 19 die Auflageoberfläche 20 von benachbarten Kettengliedern 8 ohne Spalt aneinander anliegen, wobei die Wölbung der Auflageoberfläche 20 dem Umlenkradius der Schubkette 5 im Bereich der Umlenkung 19 entspricht. Diese Ausbildung geht insbesondere aus der Schnittdarstellung der Figur 7 hervor.

Aus den Figuren 6 und 7 ist auch zu erkennen, dass die Förderelemente 6 bei der Abwärtsfahrt im linken Kettentrum 12 mit ihrer Öffnung in das Innere des umlaufenden Förderstranges 4 gerichtet sind. Bei der Aufwärtsfahrt im rechten Kettentrum 12 sind die Öffnungen der Förderelemente 6 hingegen vertikal nach oben gerichtet.

Da die Antriebselemente 10 von außen an die Schubketten 5 angreifen, kann eine als Förderband 14 ausgebildete Aufgabevorrichtung 13 im Inneren des Förderstranges 4 angeordnet sein. Mit dem Förderband 14 kann somit Schüttgut in die in der Umlenkung 19 befindlichen Förderelemente 16 aufgegeben werden.

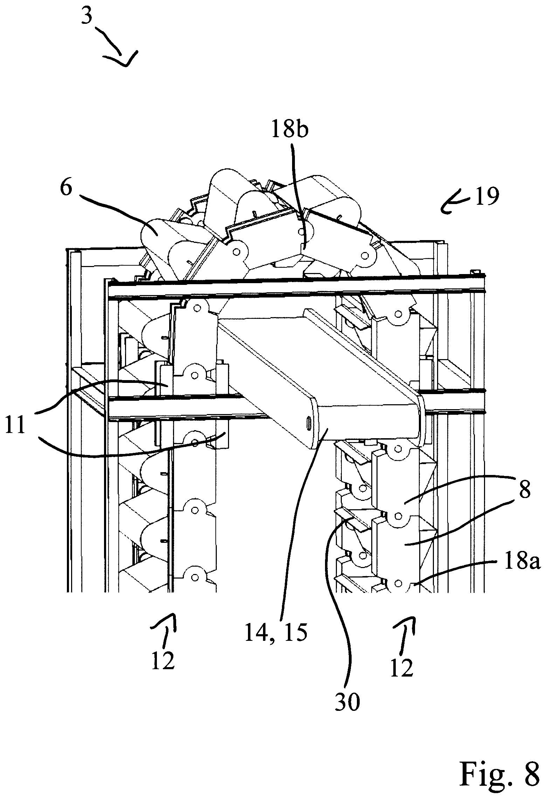

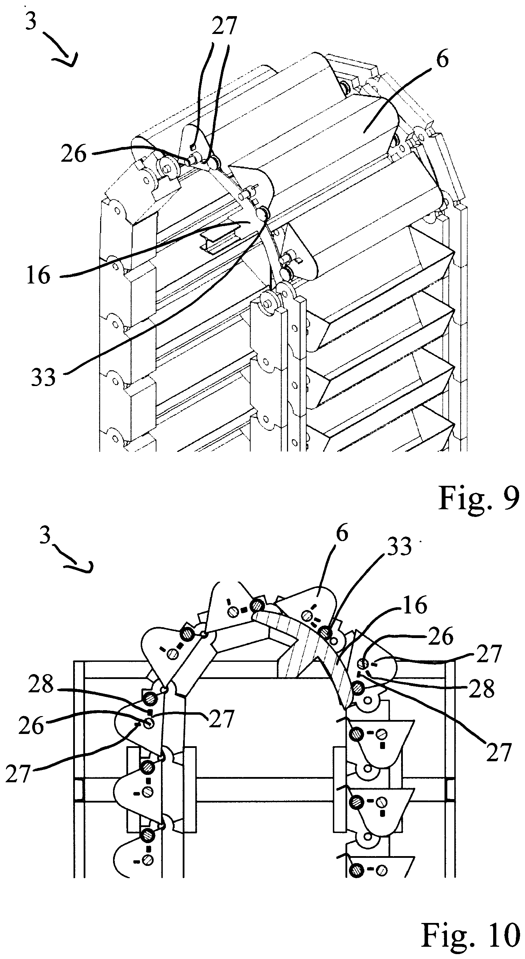

In den Figuren 8 bis 11 ist der Fördererkopf 3 des Vertikalförderers 1 dargestellt. Auch im Bereich des Fördererkopfes 3 sind Führungen 11 angeordnet, die die vertikale Anordnung der Schubkette 5 beziehungsweise deren Kettentrume 12 sicherstellen. Die mit Schüttgut befüllten Förderelemente 6 werden im rechten Kettentrum 12 zum Fördererkopf 3 mittels der Schubketten 5 bewegt. Wie insbesondere aus den Figuren 9 bis 11 hervorgeht, gelangt die Vorsprunggestaltung 33 der Förderelemente 6 im Bereich des Fördererkopfes 3 in Anlage mit der ortsfest zwischen Schubkette 5 und Förderelement 6 angeordneten Kurvenscheibe 16. Da die Förderelemente 6 an der ortsfesten Kurvenscheibe 16 vorbeigeführt werden, wird durch das Zusammenwirken der Vorsprunggestaltung 33 mit der Kurvenscheibe 16 eine Kippbewegung der Förderelemente 6 ausgeführt, sodass am höchsten Punkt des Vertikalförderers 1 die Öffnungen der Förderelemente 6 nach unten gerichtet sind und die Förderelemente 6 vollständig entladen werden. Damit das so entladene Schüttgut abtransportiert werden kann, ist beispielhaft eine Aufnahmevorrichtung 15 in Form eines Förderbandes 14 im Bereich des Fördererkopfes 3 innerhalb des Förderstranges 4 angeordnet. Alternativ kann das Schüttgut in eine Abwurfschurre aufgegeben werden.

Aus der Figur 10 geht auch das Zusammenwirken der an den Förderelementen 6 ausgebildeten Anschlagselemente 27 mit den an den Kettengliedern 8 ausgebildeten Gegenanschlagselementen 28 hervor. So ist während der Vertikalfahrt nach oben das unterhalb des Lagerelements 26 angeordnete Anschlagselement 27 mit dem Gegenanschlag 28 in Anlage, sodass eine Pendelbewegung des Förderelementes 6 in eine Richtung unterbunden wird. Nach der durch die Kurvenscheibe 16 eingeleiteten Kippbewegung gelangt das andere Anschlagselement 27, welches zwischen Lagerelement 26 und Vorsprunggestaltung 33 angeordnet ist, in Anlage mit dem Gegenanschlagselement 28 des Förderelements 6.

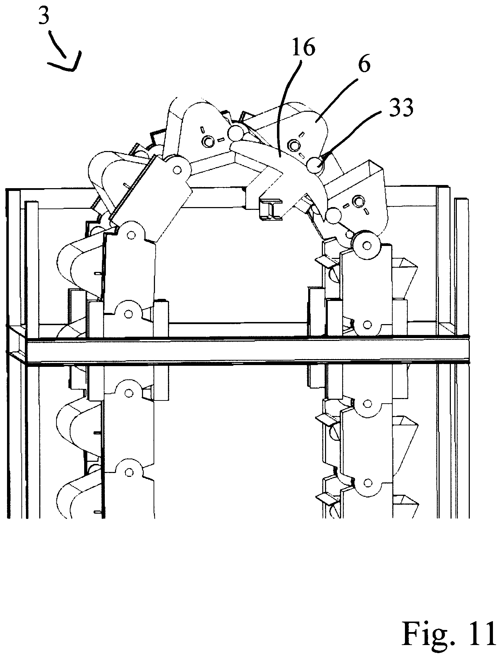

Die in Figur 11 dargestellte Ausführungsform des Vertikalförderers 1 unterscheidet sich in der Ausgestaltung der Kurvenscheibe 16. Diese ist so gestaltet, dass die Kippbewegung durch die Kurvenscheibe 16 erst zu einem späteren Zeitpunkt eingeleitet wird, wozu die Kurvenscheibe 16 kürzer ausgeführt ist.

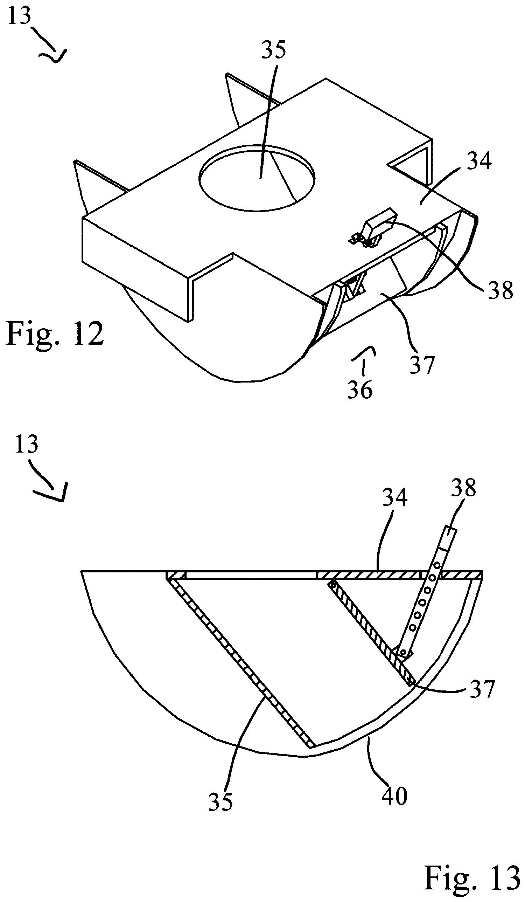

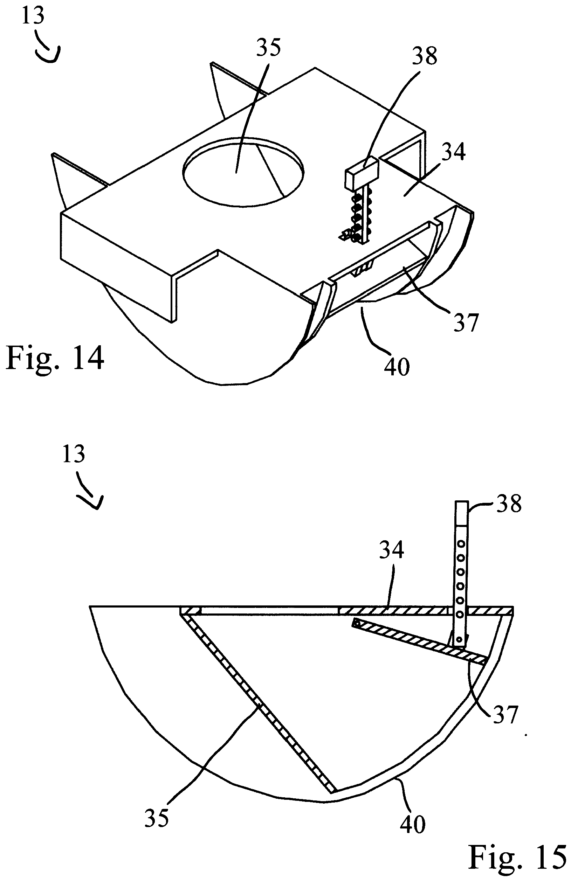

In den Figuren 12 bis 15 ist eine Aufgabevorrichtung 13 dargestellt, die am Fördererfuß 2 innerhalb des Förderstranges 4 angeordnet werden kann. Die Aufgabevorrichtung 13 weist einen Deckel 34 auf, durch welchen Schüttgut in die Aufgabevorrichtung 13 eingebracht werden kann. Unterhalb des Deckels 34 ist ein Bodenbereich 35 ausgebildet, der zu einem Durchgangsloch 40 geneigt ist. Oberhalb des Bodenbereiches 35 und des Durchgangslochs 40 ist eine in ihrer Ausrichtung verstellbare Platte 37 angeordnet, die mittels einer Betätigung 38 verschwenkt werden kann. Die Betätigung 38 kann in verschiedenen Stellungen und somit in verschiedenen Schwenkstellungen der Platte 37 an dem Deckel 34 festgelegt werden. Die Platte 37 und die Betätigung 38 bilden somit eine Einstellvorrichtung 36 der Aufgabevorrichtung 13.

### Bezugszeichenliste

- 1: Vertikalförderer
- 2: Fördererfuß
- 3: Fördererkopf
- 4: Förderstrang
- 5: Schubkette
- 6: Förderelement
- 7: Antrieb
- 8: Kettenglied
- 9: Auflager
- 10: Antriebselement
- 11: Führung
- 12: Kettentrum
- 13: Aufgabevorrichtung
- 14: Förderband
- 15: Aufnahmevorrichtung
- 16: Kurvenscheibe
- 17: Gelenkelement
- 18a, b: Anschlag
- 19: Umlenkung
- 20: Auflageoberfläche
- 21: Boden
- 22: Wand
- 23: Ausnehmung
- 24: Vorsprung
- 25: Wandung
- 26: Lagerelement
- 27: Anschlagselement
- 28: Gegenanschlagselement
- 29: Kante
- 30: Überhang
- 31: Becherboden
- 32: Rand
- 33: Vorsprunggestaltung
- 34: Deckel
- 35: Bodenbereich
- 36: Einstellvorrichtung
- 37: Platte
- 38: Betätigung
- 39: Anbringung
- 40: Durchgangsloch
- 41: Abwärtsfahrt
- 42: Aufwärtsfahrt

## Patentansprüche

1. Vertikalförderer (1) zum stetigen Fördern von Gütern, insbesondere Schüttgütern, in vertikaler Richtung, mit mindestens einem zwischen einem Fördererfuß (2) und einem vertikal darüber angeordneten Fördererkopf (3) geschlossen umlaufenden Förderstrang (4), der mindestens ein Antriebsmittel und eine Vielzahl von an dem Antriebsmittel angebrachten Förderelementen (6), insbesondere Bechern, zur Aufnahme der Güter umfasst, und mit mindestens einem Antrieb (7) zum Antreiben des mindestens einen Antriebsmittels zu einer Umlaufbewegung in einer Umlaufebene, wobei das Antriebsmittel eine Schubkette (5) ist, **dadurch gekennzeichnet, dass** Kettenglieder (8) der Schubkette (5) so ausgebildet sind, dass ein Abknicken gegenüber einem benachbarten Kettenglied (8) in der Umlaufebene nach außen über einen Schwenkwinkel von 180° hinaus verhindert ist, und dass mindestens ein Auflager (9) ausgebildet ist, auf dem die in sich geschlossene Schubkette (5) mit einer in der Umlaufebene der Schubkette (5) nach außen gerichteten Außenseite aufliegt, wobei sich das Auflager (9) bei sich umlaufend bewegender Schubkette (5) dreht.

2. Vertikalförderer (1) nach Anspruch 1, wobei der mindestens eine Antrieb (7) ausschließlich im Bereich des Fördererfußes (2) auf die Schubkette (5) wirkt.

3. Vertikalförderer (1) nach Anspruch 1 oder 2, wobei ein die Antriebskraft auf die Schubkette (5) übertragendes Antriebselement (10) des Antriebes (7) in der Umlaufebene auf einer Außenseite der Schubkette (5) angeordnet ist.

4. Vertikalförderer (1) nach einem der vorhergehenden Ansprüche, wobei ein Antriebselement (10) des Antriebs (7) die Antriebskraft vorzugsweise kraftschlüssig oder formschlüssig auf die Schubkette (5) überträgt.

5. Vertikalförderer (1) nach einem der vorhergehenden Ansprüche, wobei ein Antriebselement (10) des Antriebs (7) und das Auflager (9) durch dasselbe Bauteil verwirklicht sind.

6. Vertikalförderer (1) nach einem der vorhergehenden Ansprüche mit mindestens zwei Schubketten (5), wobei zwischen zwei Schubketten (5) jeweils die Förderelemente (6) vorzugsweise pendelnd gelagert sind.

7. Vertikalförderer (1) nach einem der vorhergehenden Ansprüche, wobei im unteren Bereich des Vertikalförderers (1) auf zwei gegenüberliegenden Außenseiten des Förderstranges (4) in der Ebene der mindestens einen umlaufenden Schubkette (5) Führungen (11) angeordnet sind, die die Ausbildung zweier paralleler und vertikal ausgerichteter Kettentrume (12) vorgeben.

8. Vertikalförderer (1) nach einem der vorhergehenden Ansprüche, wobei eine Aufgabevorrichtung (13), insbesondere ein Förderband (14), für die Güter insbesondere im Bereich des Fördererfußes (2) innerhalb des geschlossen umlaufenden Förderstranges (4) angeordnet ist.

9. Vertikalförderer (1) nach einem der vorhergehenden Ansprüche, wobei eine Aufgabevorrichtung (13, 14) so angeordnet ist, dass die Aufgabe der Güter in die Förderelemente (6) in einem Bereich des Förderstranges (4) erfolgen kann, in dem sich die Förderelemente (6) vertikal nach unten bewegen oder in dem die Förderelemente (6) umgelenkt werden können.

10. Vertikalförderer (1) nach einem der vorhergehenden Ansprüche, wobei eine Aufnahmevorrichtung (15), insbesondere ein Förderband (14), für die aus den Förderelementen (6) entleerten Güter innerhalb des geschlossen umlaufenden Förderstranges (4) angeordnet ist.

11. Vertikalförderer (1) nach einem der vorhergehenden Ansprüche, welcher eine Kurvenscheibe (16) umfasst, die so angeordnet und ausgebildet ist, dass die an der Kurvenscheibe (16) vorbeilaufenden Förderelemente (6) eine von der Kurvenscheibe (16) vorgegebene Ausrichtung einnehmen.

12. Vertikalförderer (1) nach einem der vorhergehenden Ansprüche, wobei der Vertikalförderer (1) ein Fahrwerk aufweist, mittels dessen der Vertikalförderer (1) verfahrbar ist.

## Claims

1. A vertical conveyor (1) for continuously conveying goods, in particular bulk goods, in a vertical direction, with at least one continuous conveying line (4) that circulates in a closed manner between a conveying foot (2) and a conveying head (3) arranged vertically thereover, and comprises at least one driving means and a plurality of conveying elements (6), in particular buckets, secured to the driving means for receiving the goods, and with at least one drive (7) for driving the at least one driving means into a circulating movement in a plane of circulation, wherein the driving means is a push chain (5), **characterized in that** chain links (8) of the push chain (5) are designed in such a way as to prevent an outward kinking relative to an adjacent chain link (8) in the plane of circulation over a pivot angle of 180°, and that at least one support (9) is formed, on which the self-closed push chain (5) rests with an outwardly directed exterior side in the plane of circulation of the push chain (5), wherein the support (9) turns given a circulating moving push chain (5).

2. The vertical conveyor (1) according to claim 1, wherein the at least one drive (7) acts on the push chain (5) exclusively in the area of the conveying foot (2).

3. The vertical conveyor (1) according to claim 1 or 2, wherein a drive element (10) of the drive (7) that conveys the driving force to the push chain (5) is arranged on an exterior side of the push chain (5) in the plane of circulation.

4. The vertical conveyor (1) according to one of the preceding claims, wherein a drive element (10) of the drive (7) conveys the driving force to the thrust chain (5) preferably non-positively or positively.

5. The vertical conveyor (1) according to one of the preceding claims, wherein a drive element (10) of the drive (7) and the support (9) are realized by the same component.

6. The vertical conveyor (1) according to one of the preceding claims with at least two push chains (5), wherein the respective conveying elements (6) are preferably pivotably mounted between two push chains (5).

7. The vertical conveyor (1) according to one of the preceding claims, wherein guides (11) that prescribe the formation of two parallelly and vertically aligned chain strands (12) are arranged on two opposing exterior sides of the conveying line (4) in the plane of the at least one continuous push chain (5) in the lower area of the vertical conveyor (1).

8. The vertical conveyor (1) according to one of the preceding claims, wherein a dispensing device (13), in particular a conveyor belt (14), for the goods is arranged in particular in the area of the conveying foot (2) inside of the closed, continuous conveying line (4).

9. The vertical conveyor (1) according to one of the preceding claims, wherein a dispensing device (13, 14) is arranged in such a way that the goods can be dispensed in the conveying elements (6) in an area of the conveying line (4) in which the conveying elements (6) move vertically downward or in which the conveying elements (6) can be deflected.

10. The vertical conveyor (1) according to one of the preceding claims, wherein a receiving device (15), in particular a conveyor belt (14), for the goods emptied from the conveying elements (6) is arranged inside of the closed, continuous conveying line (4).

11. The vertical conveyor (1) according to one of the preceding claims, which comprises a cam disc (16), which is arranged and configured in such a way that the conveying elements (6) running past the cam disc (16) assume an alignment prescribed by the cam disc (16).

12. The vertical conveyor (1) according to one of the preceding claims, wherein the vertical conveyor (1) has a chassis, by means of which the vertical conveyor (1) can be moved.

## Revendications

1. Convoyeur vertical (1) pour le transport en continu de produits, en particulier de produits en vrac, en direction verticale, avec au moins une ligne de transport (4) fermée circulant entre un pied de convoyeur (2) et une tête de convoyeur (3) disposée verticalement dessus, qui comprend au moins un moyen d'entraînement et une pluralité d'éléments de transport (6), en particulier des godets, disposés sur le moyen d'entraînement, pour recevoir des produits et avec au moins un système d'entraînement (7) pour entraîner au moins un moyen d'entraînement en un mouvement de rotation dans un plan de rotation, sachant que le moyen d'entraînement est une chaîne de poussée (5), **caractérisé en ce que** les maillons de chaîne (8) de la chaîne de poussée (5) sont constitués de manière à éviter un pliage par rapport à un maillon de chaîne (8) voisin dans le plan de rotation vers l'extérieur au-delà d'un angle de pivotement de 180° et **en ce qu'**au moins u support (9) est constitué sur lequel repose la chaîne de poussée (5) fermée sur elle-même avec un côté extérieur orienté vers l'extérieur dans le plan de rotation de la chaîne de poussée (5), sachant que le support (9) tourne lorsque la chaîne de poussée (5) se déplace en rotation.

2. Convoyeur vertical (1) selon la revendication 1, sachant qu'au moins un système d'entraînement (7) agit exclusivement dans le secteur du pied de convoyeur (2) sur la chaîne de poussée (5).

3. Convoyeur vertical (1) selon la revendication 1 ou 2, sachant qu'un élément d'entraînement (10) transmettant la force d'entraînement à la chaîne de poussée (5) du système d'entraînement (7) est disposé dans le plan de rotation sur un côté extérieur de la chaîne de poussée (5).

4. Convoyeur vertical (1) selon l'une quelconque des revendications précédentes, sachant qu'un élément d'entraînement (10) du système d'entraînement (7) transmet la force d'entraînement de préférence par conformité de force ou de forme à la chaîne de poussée (5).

5. Convoyeur vertical (1) selon l'une quelconque des revendications précédentes, sachant qu'un élément d'entraînement (10) du système d'entraînement (7) et le support (9) sont réalisés par le même composant.

6. Convoyeur vertical (1) selon l'une quelconque des revendications précédentes avec au moins deux chaînes de poussée (5), sachant que les éléments de transport (6) entre les deux chaînes de poussée (5) sont respectivement logés de préférence de façon oscillante.

7. Convoyeur vertical (1) selon l'une quelconque des revendications précédentes, sachant que dans la zone inférieure du convoyeur vertical (1) sur deux côtés extérieurs opposés de la ligne de transport (4), des guides (11) sont disposés dans le plan d'au moins une chaîne de poussée (5) en rotation, qui confèrent la formation de deux brins de chaîne (12) parallèles et orientés verticalement.

8. Convoyeur vertical (1) selon l'une quelconque des revendications précédentes sachant qu'un dispositif de distribution (13), en particulier une bande transporteuse (14) est disposé pour les produits en particulier dans la zone du pied de convoyeur (2) à l'intérieur de la ligne de transport (4) fermée en rotation.

9. Convoyeur vertical (1) selon l'une quelconque des revendications précédentes, sachant que le dispositif de distribution (13, 14) est disposé de telle manière que la distribution des produits dans les éléments de transport (6) peut avoir lieu dans une zone de la ligne de transport (4) dans laquelle les éléments de transport (6) se déplacent verticalement vers le bas ou dans lequel les éléments de transport (6) peuvent être déviés.

10. Convoyeur vertical (1) selon l'une quelconque des revendications précédentes, sachant que le dispositif de réception (15), en particulier une bande transporteuse (14), est disposé à l'intérieur de la ligne de transport (4) fermée en rotation pour les produits vidés des éléments de transport (6).

11. Convoyeur vertical (1) selon l'une quelconque des revendications précédentes, lequel comprend une came (16) qui est disposée et constituée de telle manière que les éléments de transport (6) passant sur la came (16) adoptent une orientation conférée par la came (16).

12. Convoyeur vertical (1) selon l'une quelconque des revendications précédentes, sachant que le convoyeur vertical (1) comporte un mécanisme de déplacement au moyen duquel le convoyeur vertical (1) peut être déplacé.
